# EUROPÄISCHE PATENTSCHRIFT

(11) **EP 2 722 228 B1**
(45) Veröffentlichungstag und Bekanntmachung des Hinweises auf die Patenterteilung: **01.05.2019**
(21) Anmeldenummer: 13002970.5
(22) Anmeldetag: 10.06.2013
(51) Int. Cl.: B60Q 1/30, B60Q 1/32, B60Q 1/38, B60Q 1/46

(54) **Beleuchtungs- und Signaleinrichtung eines mehrspurigen Kraftfahrzeugs**
Lighting and signal device of a multi-track motor vehicle
Dispositif d'éclairage et de signal d'un véhicule automobile à plusieurs voies

(30) Priorität: 18.10.2012 DE 102012020441
(43) Veröffentlichungstag der Anmeldung: 23.04.2014
(73) Patentinhaber: MAN Truck & Bus AG, 80995 München (DE)
(72) Erfinder: Foscari, Nicola, 80939 München (DE); Kaiser, Stephan, 86343 Königsbrunn (DE); Strauß, Johannes, 85276 Hettenhausen (DE)
(74) Vertreter: Liebl, Thomas

(56) Entgegenhaltungen:
- US-A- 2 911 620
- US-A- 4 198 674
- US-A- 5 497 304
- US-A1- 2003 179 584

## Beschreibung

Die Erfindung betrifft ein Fahrzeug, insbesondere ein mehrspuriges Kraftfahrzeug, mit einer Beleuchtungs- und Signaleinrichtung nach dem Oberbegriff des Anspruchs 1.

Insbesondere betrifft die Erfindung eine Beleuchtungs- und Signaleinrichtung bei einem Kraftfahrzeug, beispielsweise bei einem Bus oder einem Zugfahrzeug mit einem Auflieger oder Anhänger, an dem aufgrund gesetzlicher Vorgaben Seitenmarkierungsleuchten und seitliche Fahrtrichtungsanzeiger erforderlich sind. Bei einer solchen allgemein bekannten Beleuchtungs- und Signaleinrichtung sind mehrere an einer linken und rechten Fahrzeugseite beabstandet voneinander, punktuell angeordnete, schaltbare Seitenmarkierungsleuchten angeordnet, die eingeschaltet jeweils in einem definierten Seitenmarkierungsleuchten-Abstrahlwinkel und mit definierter Seitenmarkierungsleuchten-Leuchtintensität abstrahlen. Zudem sind beidseitig am Fahrzeug jeweils zugeordnete Fahrtrichtungsanzeiger angebracht, die unabhängig voneinander und seitenmarkierungsleuchtenunabhängig schaltbar sind und eingeschaltet mit einer Blinkfunktion blinken. Dabei strahlen sie Licht mit definierter Fahrtrichtungsanzeiger-Leuchtintensität in einem definierten Fahrtrichtungsanzeiger-Abstrahlwinkel nach hinten ab.

Ein Kraftfahrzeug mit Seitenmarkierungsleuchten ist aus DE 203 12 419 U1 bekannt, bei dem zusätzlich zur Seitenmarkierungsfunktion mit einem abgezweigten Teillichtbündel ein unterer Bereich des Fahrzeugs beleuchtet wird.

Zudem ist ein Leuchtmitteleinsatz zur Verwendung in einer Leuchte, beispielsweise auch in einer Seitenmarkierungsleuchte eines Nutzfahrzeugs, insbesondere eines Lastkraftwagens, Anhängers und/oder Sattelaufliegers aus DE 20 2010 017 453 U1 bekannt, wobei in einem Gehäuse ein Sockel zur Aufnahme mehrerer Leuchtmitteleinsätze vorgesehen sein kann. Die mehreren Leuchtmitteleinsätze sind hier jeweils gemeinsam angesteuert und dienen bedarfsweise zur Verstärkung der Leuchtintensität für die gleiche Beleuchtungs- oder Signalfunktion.

Weiter ist eine Seitenbeleuchtung für einen Lastkraftwagen aus der DE 10 2007 006 263 A1 bekannt, bei der seitlich Leuchtbänder etwa mit der Funktion von Seitenmarkierungsleuchten an Seitenverkleidungen angebracht sind. Dazu sollen insbesondere eine Mehrzahl LEDs verwendet werden. Als Alternative zu einer Dauerbeleuchtung ist angegeben, dass wenigstens eines der Leuchtbänder als Fahrtrichtungsanzeiger mit Blinkerfunktion ausgeführt sein kann. Solche Leuchtbänder sind langgestreckte, flache Teile und es nicht erkennbar, wie damit die gesetzlichen Vorgaben für die Lichtabstrahlwinkel für Seitenmarkierungsleuchten eingehalten werden können. Noch weniger ist vorstellbar, wie in der Funktion eines Fahrtrichtungsanzeigers die gesetzlichen Vorgaben für einen Abstrahlwinkel nach hinten (60°-5°) erfüllt werden könnten. Aufgrund der gesetzlichen Vorgaben für die Abstrahlwinkel dürften somit solche flache Leuchtbänder weder für Seitenmarkierungsleuchten noch für Fahrtrichtungsanzeiger zulassungsfähig sein.

Bei allen bekannten Anordnungen von Seitenmarkierungsleuchten und seitlichen Fahrtrichtungsanzeigern sind diese nicht nur unabhängig voneinander ansteuerbar, sondern auch unabhängig voneinander und relativ weit voneinander beabstandet am Fahrzeug angeordnet, was eine ungünstig große Teilevielfalt und relativ große Montagekosten bedingt.

Aus der weiteren US 5 497 304 A ist ein Fahrzeug mit einer Beleuchtungs- und Signaleinrichtung bekannt, bei der links- und rechtsseitig an einem Auflieger jeweils mehrere Gruppen von Warnleuchten in Aufliegerlängsrichtung beabstandet hintereinander angeordnet sind. Jede dieser Gruppen weist drei Warnleuchten auf, nämlich eine rote Warnleuchte sowie zwei gelbe Warnleuchten, die jeweils in Hochachsenrichtung übereinander angeordnet sind.

Aufgabe der Erfindung ist es, eine gattungsgemäße Beleuchtungs- und Signaleinrichtung eines mehrspurigen Kraftfahrzeugs so weiterzubilden, dass bei Erfüllung von gesetzlichen Vorgaben Seitenmarkierungsleuchten und Fahrtrichtungsanzeiger kostengünstig mit guter Warn- und Signalfunktion angebracht werden können.

Diese Aufgabe wird gelöst mit den Merkmalen des Patentanspruchs 1. Vorteilhafte Ausgestaltungen sind Gegenstand der darauf rückbezogenen Unteransprüche.

Gemäß Patentanspruch 1 ist ein Fahrzeug mit einer Beleuchtungs- und Signaleinrichtung vorgesehen, mit mehreren an einer linken und rechten Fahrzeugseite beabstandet voneinander punktuell angeordneten, schaltbaren Seitenmarkierungsleuchten, die eingeschaltet jeweils Licht in einem definierten Seitenmarkierungsleuchten-Abstrahlwinkel und mit definierter Seitenmarkierungsleuchten-Leuchtintensität abstrahlen. Ferner sind beidseitig am Fahrzeug angebrachte Fahrtrichtungsanzeiger vorgesehen, die unabhängig voneinander und seitenmarkierungsleuchtenunabhängig schaltbar sind, die weiter eingeschaltet mit einer Blinkfunktion blinken und dabei Licht mit definierter Blinkfrequenz in einem definierten Fahrtrichtungsanzeiger-Abstrahlwinkel und mit definierter Fahrtrichtungsanzeiger-Leuchtintensität abstrahlen. Zudem ist vorgesehen, dass an wenigstens einer Position einer Seitenmarkierungsleuchte eine Seitenmarkierungsleuchte mit einem seitlichen Fahrtrichtungsanzeiger kombiniert ist, dergestalt, dass die Seitenmarkierungsleuchte und der Fahrtrichtungsanzeiger unmittelbar in einem Nahbereich übereinander angeordnet sind.

Durch die unmittelbare Nähe einer Seitenmarkierungsleuchte und eines Fahrtrichtungsanzeigers ergeben sich konstruktive Vorteile, da beispielsweise die Anordnung in einem gemeinsamen Aufnahmeausschnitt eines Verkleidungsteils oder eines Seitenblechs mit einer gemeinsamen Leitungsführung der elektrischen Steuerleitungen möglich ist. Wesentlich ist dabei die übereinander liegende Anordnung, damit sich die unterschiedlich vorgeschriebenen Lichtabstrahlwinkel (für Seitenmarkierungsleuchten nach vorne und hinten; für Fahrtrichtungsanzeiger in einem anderen Winkelbereich nur nach hinten) nicht überlappen und stören können, so dass keine irreführenden Signale erzeugt werden können. Der hier angesprochene Nahbereich wäre verlassen, wenn sich die Abstrahlwinkel der jeweils zugeordneten Seitenmarkierungsleuchten und des Fahrtrichtungsanzeigers durch einen relativen großen Abstand bei nebeneinanderliegender Anordnung nicht mehr beeinflussen.

Erfindungsgemäß ist die Seitenmarkierungsleuchte mit ihrem Seitenmarkierungsleuchten-Leuchtkörper und ihren Seitenmarkierungsleuchten-Lichtleitelementen sowie der zugeordnete Fahrtrichtungsanzeiger mit seinem Fahrtrichtungsanzeiger-Leuchtkörper und seinen Fahrtrichtungsanzeiger-Lichtleitelementen in einem gemeinsamen einteiligen oder zusammengebauten Leuchtengehäuse übereinander und, vorzugsweise durch eine Trennwand, getrennt angeordnet. Bei dieser Anordnung können bei guter Warn- und Signalfunktion die konstruktiven Vorteile besonders gut genutzt und Kosten reduziert werden. Seitenmarkierungsleuchten und Fahrtrichtungsanzeiger sind zwar hier in einem Gehäuse kombiniert und integriert, jedoch so weit eigenständig belassen, dass die gesetzlichen Vorgaben hinsichtlich der Abstrahlwinkel und Leuchtintensitäten sowie der Farbgebung unabhängig voneinander einfach erfüllbar sind. Als Leuchtkörper können in an sich bekannter Weise Glühlampen oder LEDs und als Lichtleitelemente insbesondere Reflektoren verwendet werden.

Die Seitenmarkierungsleuchte und ein dieser zugeordneter Fahrtrichtungsanzeiger weisen erfindungsgemäß jeweils einen unterschiedlichen Abstrahlwinkel bzw. Abstrahlwinkelbereich auf, um die unterschiedlichen Signal- und Warnfunktionen in optimaler Weise erfüllen zu können.

Dabei soll die Seitenmarkierungsleuchte, zum Beispiel entsprechend den gesetzlichen Vorgaben, bezogen auf eine senkrecht auf die zugeordnete Fahrzeugseite ausgerichtete Vertikalfläche nach vorne und hinten jeweils in einem definierten Abstrahlwinkel abstrahlen, insbesondere in einem Abstrahlwinkel von 45° abstrahlen. Grundsätzlich kann auch, sofern dies die gesetzlichen Vorschriften in einem Land erlauben, jeder andere geeignete bzw. erlaubte Winkelwert vorgegeben werden. Es versteht sich weiter, dass mit dem Abstrahlwinkel hier insgesamt ein Winkelbereich definiert bzw. gemeint ist, im vorliegenden Beispielfall der Abstrahlung im Abstrahlwinkel von 45° nach vorne und hinten ein Abstrahlbereich von 90°.

Der seitliche Fahrtrichtungsanzeiger soll dagegen von oben betrachtet bezogen auf die Fahrzeugseitenfläche in einem definierten, insbesondere gesetzlich vorgegebenen, Abstrahlwinkel nach hinten abstrahlen, zum Beispiel in einem Abstrahlwinkel von 60° nach hinten abstrahlen. Dieser Abstrahlwinkel kann gegebenenfalls ausgehend von der Fahrzeugseitenfläche um einen vorgegebenen Winkel, zum Beispiel um einen Winkel von 5°, reduziert sein kann. Es versteht sich weiter, dass mit dem Abstrahlwinkel auch hier wiederum ein Winkelbereich gemeint ist, im vorliegenden Beispielfall der Abstrahlung im Abstrahlwinkel von 60° nach hinten ein Abstrahlbereich von 0° bis 60°, ggf. bei einer Winkelreduzierung um zum Beispiel 5° ein Abstrahlbereich von 5° bis 60°. Die Lichtstärke nach hinten soll bevorzugt mindestens 50 cd und höchstens 200 cd betragen.

Durch die funktionale Trennung der Seitenmarkierungsleuchte und des zugeordneten Fahrtrichtungsanzeiger kann die Seitenmarkierungsleuchten-Leuchtintensität und die Fahrtrichtungsanzeiger-Leuchtintensität einfach unterschiedlich entsprechend den gesetzlichen Vorgaben ausgelegt werden. Die Ansteuerung der links- und rechtsseitig am Fahrzeug angebrachten Seitenmarkierungsleuchten soll in an sich bekannter vorgegebener Weise so erfolgen, dass bei eingeschaltetem Standlicht alle Seitenmarkierungsleuchten dauerhaft mit eingeschaltet sind und leuchten.

Die Ansteuerung der seitlichen Fahrtrichtungsanzeiger erfolgt unabhängig und unterschiedlich zu den Seitenmarkierungsleuchten:
Bei eingeschaltetem oder nicht eingeschaltetem Standlicht werden die seitlichen Fahrtrichtungsanzeiger entsprechend der Blinkerbetätigung links oder rechts im Blinkbetrieb mit eingeschaltet. Bei eingeschalteter Warnblinkanlage oder bei eingelegtem Rückwärtsgang, eventuell nur bei eingeschaltetem Standlicht werden die Fahrtrichtungsanzeiger jedoch beidseitig im Blinkbetrieb mit eingeschaltet.

Die erfindungsgemäße Kombination aus jeweils einer Seitenmarkierungsleuchte und eines Fahrtrichtungsanzeigers kann vorteilhaft an einem Bus oder einem Zugfahrzeug und/oder einem Sattelauflieger und/oder einem Anhänger realisiert werden, insbesondere dann, wenn aufgrund gesetzlicher Vorgaben die Anordnung von Seitenmarkierungsleuchten erforderlich ist.

Anhand einer Zeichnung wird die Erfindung beispielhaft näher erläutert.

Es zeigen:
- Fig. 1: ein mehrspuriges Zugfahrzeug mit Sattelanhänger mit im Seitenbereich in Längsabständen angebrachten Beleuchtungs- und Signaleinheiten,
- Fig. 2: eine schematische Draufsicht auf eine Beleuchtungs- und Signaleinheit,
- Fig. 3: eine Draufsicht von oben zur Verdeutlichung des Abstrahlwinkels einer Seitenmarkierungsleuchte,
- Fig. 4: eine entsprechende schematische Ansicht von oben zur Verdeutlichung des Abstrahlwinkels eines Fahrtrichtungsanzeigers, und
- Fig. 5: eine Steuereinrichtung mit zugeordnetem Ablaufdiagramm.

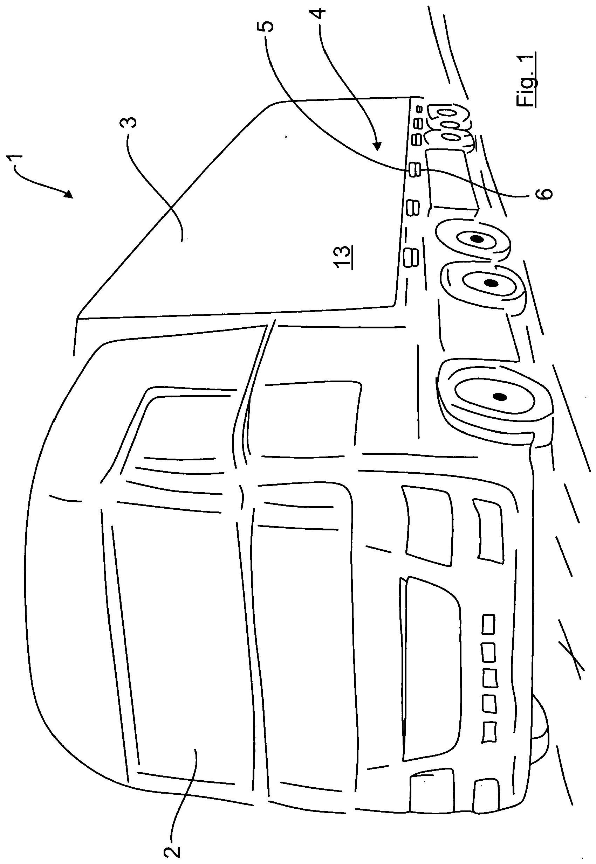

In Fig. 1 ist schematisch ein mehrachsiges Kraftfahrzeug 1 aus einem Zugfahrzeug 2 und einem Sattelanhänger 3 dargestellt, bei dem auf beiden Fahrzeugseiten voneinander in Längsrichtung beabstandet erfindungsgemäße Kombileuchten 4 jeweils mit einer oberen Seitenmakierungsleuchte 5 und einem unteren Fahrtrichtungsanzeiger 6 angeordnet sind.

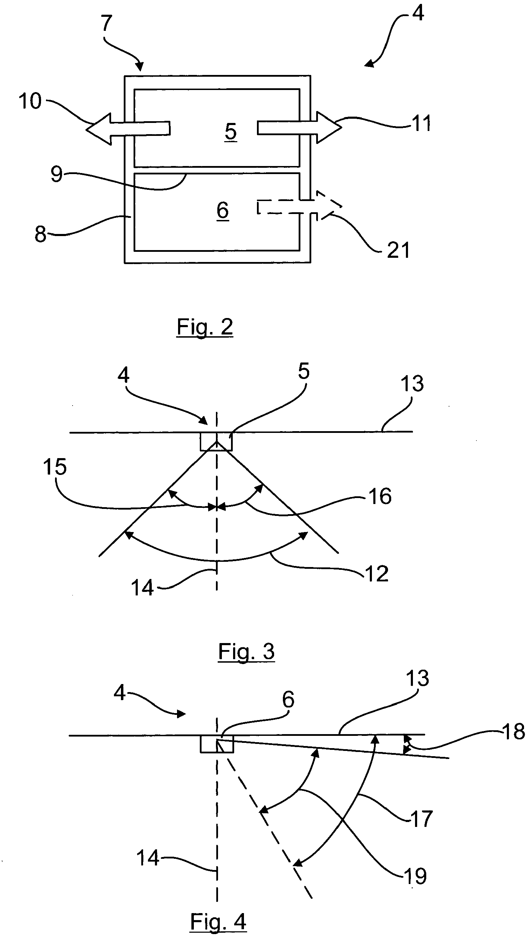

In Fig. 2 ist schematisch eine solche Kombileuchte 4 in einer seitlichen Draufsicht gezeigt.

Seitenmarkierungsleuchten 5 und Fahrtrichtungsanzeiger 6 sind als Kombileuchte 4 in einem gemeinsamen Leuchtengehäuse 7 eingebaut, von dem in Fig. 2 lediglich der Frontrahmen 8 zu sehen ist. Der Einbauraum für die Seitenmarkierungsleuchte 5 beziehungsweise deren nicht im einzelnen dargestellten Seitenmarkierungsleuchten-Leuchtkörper und Seitenmarkierungsleuchten-Lichtleitelemente liegt oberhalb des Einbauraums für den Fahrtrichtungsanzeiger 6 beziehungsweise dessen nicht dargestellten Fahrtrichtungsanzeiger-Leuchtkörper und Fahrtrichtungsanzeiger-Lichtleitelementen. Beide Einbauräume sind durch eine horizontale Trennwand, insbesondere eine lichtundurchlässige Trennwand 9 voneinander getrennt.

In Fig. 2 ist schematisch durch Lichtpfeile 10 und 11 angegeben, dass die Seitenmarkierungsleuchte 5 jeweils nach vorne (Lichtpfeil 10) und nach hinten (Lichtpfeil 11) am Fahrzeug abstrahlt. Der genaue Abstrahlwinkel ist gemäß gesetzlicher Vorgabe aus der schematischen Draufsicht von oben auf die Kombileuchte 4 bei eingeschalteter und leuchtender Seitenmarkierungsleuchte aus Fig. 3 zu entnehmen: der gesamte Abstrahlwinkel (bzw. Abstrahlwinkelbereich) 12 beträgt 90°, wobei bezogen auf eine senkrecht auf die zugeordnete Fahrzeugseite 13 ausgerichtete Vertikalfläche 14 ein Abstrahlwinkel 15 nach vorne von 45° und ein Abstrahlwinkel 16 nach hinten von 45° vorgegeben ist.

In Fig. 2 ist zudem schematisch durch den Lichtpfeil 21 angegeben, dass der Fahrtrichtungsanzeiger 6 nur nach hinten abstrahlt. Der genaue Abstrahlwinkel für den seitlichen Fahrtrichtungsanzeiger 6 aus Fahrtrichtungsanzeiger 4 ist aus der entsprechenden Ansicht von oben (Fig. 4) auf die Kombileuchte 4 bei eingeschaltetem Fahrtrichtungsanzeiger 6 zu entnehmen: bezogen auf die Fahrzeugseitenfläche 13 strahlt der blinkend eingeschaltete Fahrtrichtungsanzeiger 6 mit einem Abstrahlwinkel 17 von 60° nach hinten ab. Gegebenenfalls kann dieser Winkel 17 ausgehend von der Fahrzeugseite 13 um einen Winkel 18 von 5° zum Abstrahlwinkel 19 reduziert werden.

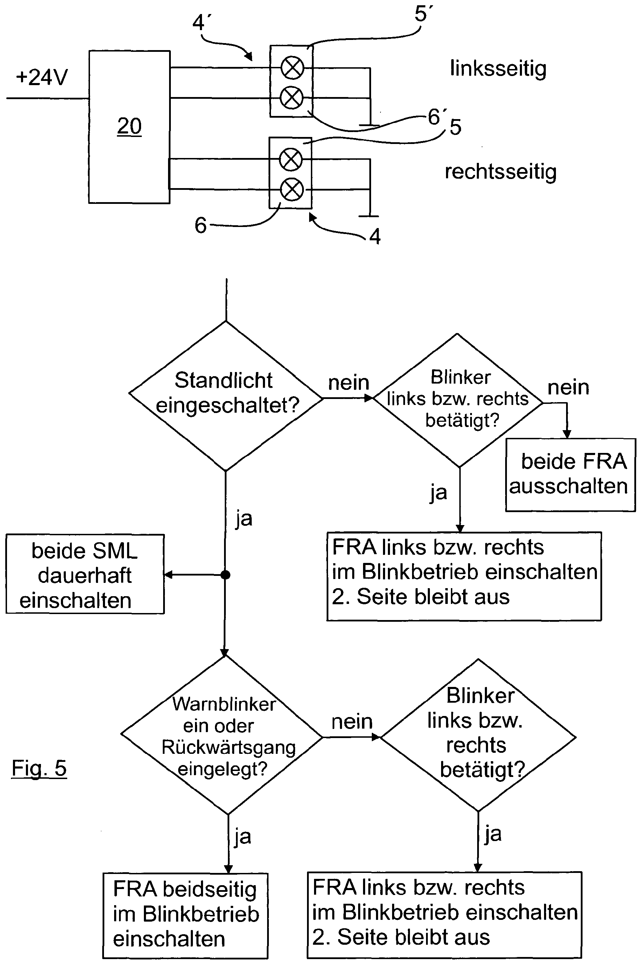

Die Seitenmarkierungsleuchten-Farbe und die Fahrtrichtungsanzeiger-Farbe sind jeweils gelb, wobei die zugeordneten Leuchtintensitäten entsprechend der gesetzlichen Vorgaben unterschiedlich sein können. In Fig. 5 ist eine Steuereinheit 20 dargestellt, an der beispielhaft die rechtsseitig am Fahrzeug angebrachte Kombileuchte 4 und die entsprechend linksseitig angebrachte Kombileuchte 4' angeschlossen ist. Die weiteren in Längsrichtung versetzten Kombileuchten 4 sind mit rechtsseitiger und linksseitiger Zuordnung parallel angeschlossen. Dabei ist jeweils die Seitenmarkierungsleuchte 5, 5' und der zugeordnete Fahrtrichtungsanzeiger 6, 6' entsprechend dem darunter gezeigten Diagramm angesteuert:

Daraus ist ersichtlich dass bei nicht eingeschaltetem Standlicht der linke beziehungsweise der rechte seitliche Fahrtrichtungsanzeiger entsprechend der Blinkerbetätigung in seiner Blinkerfunktion eingeschaltet wird. Die Seitenmarkierungsleuchten sind bei nicht eingeschaltetem Standlicht dauerhaft ausgeschaltet.

Bei eingeschaltetem Standlicht sind alle Seitenmarkierungsleuchten (linksseitig und rechtsseitig) dauerhaft eingeschaltet. Zudem ist bei eingeschaltetem Standlicht bei einer Blinkerbetätigung der jeweils zugeordnete Fahrtrichtungsanzeiger links beziehungsweise rechts im Blinkbetrieb eingeschaltet. Wenn die Warnblinkanlage eingeschaltet ist oder ein Rückwärtsgang eingelegt ist, werden dagegen die Fahrtrichtungsanzeiger beidseitig im Blinkbetrieb eingeschaltet. Diese Funktion kann gegebenenfalls auch bei nicht eingeschaltetem Standlicht vorgesehen sein.

### Bezugszeichenliste

- 1: Kraftfahrzeug
- 2: Zugfahrzeug
- 3: Sattelanhänger
- 4: Kombileuchten
- 5: Seitenmarkierungsleuchte
- 6: Fahrtrichtungsanzeiger
- 7: Leuchtengehäuse
- 8: Frontrahmen
- 9: Trennwand
- 10: Lichtpfeil
- 11: Lichtpfeil
- 12: Abstrahl 90°
- 13: Fahrzeugseite
- 14: Vertikalfläche
- 15: Abstrahl 45°
- 16: Abstrahl 45°
- 17: Abstrahl 60°
- 18: Winkel 5°
- 19: Abstrahl
- 20: Steuereinheit

## Patentansprüche

1. Fahrzeug, insbesondere mehrspuriges Kraftfahrzeug, mit einer Beleuchtungs- und Signaleinrichtung mit mehreren an einer linken und rechten Fahrzeugseite (13) beabstandet voneinander punktuell angeordneten, schaltbaren Seitenmarkierungsleuchten (5), die eingeschaltet jeweils Licht in einem definierten Seitenmarkierungsleuchten-Abstrahlwinkel (12) und mit definierter Seitenmarkierungsleuchten-Leuchtintensität abstrahlen, und mit beidseitig am Fahrzeug (1) angebrachten Fahrtrichtungsanzeigern (6), die unabhängig voneinander und seitenmarkierungs-leuchtenunabhängig schaltbar sind und eingeschaltet mit einer Blinkfunktion blinken und dabei Licht mit definierter Blinkfrequenz in einem definierten Fahrtrichtungsanzeiger-Abstrahlwinkel (17) und mit definierter Fahrtrichtungsanzeiger-Leuchtintensität abstrahlen, wobei an wenigstens einer Position einer Seitenmarkierungsleuchte (5), eine Seitenmarkierungsleuchte (5) mit einem seitlichen Fahrtrichtungsanzeiger (6) dergestalt kombiniert ist, dass die Seitenmarkierungsleuchte (5) und der Fahrtrichtungsanzeiger (6) in ihrem Nahbereich (4) unmittelbar übereinander angeordnet sind, **dadurch gekennzeichnet, dass** die Seitenmarkierungsleuchte (5), die einen Seitenmarkierungsleuchten-Leuchtkörper und Seitenmarkierungsleuchten-Lichtleitelementen aufweist, sowie der Fahrtrichtungsanzeiger (6), der einen Fahrtrichtungsanzeiger-Leuchtkörper und Fahrtrichtungsanzeiger-Lichtleitelementen aufweist, in einem gemeinsamen einteiligen oder in einem zusammengebauten Leuchtengehäuse (7) einer Kombileuchte (4) übereinander und, vorzugsweise durch eine Trennwand (9), getrennt angeordnet sind, und
dass die Seitenmarkierungsleuchte (5) und ein dieser zugeordneter Fahrtrichtungsanzeiger (6) jeweils einen unterschiedlichen Abstrahlwinkel (15, 16, 17) aufweisen.

2. Fahrzeug nach Anspruch 1, **dadurch gekennzeichnet, dass** die Seitenmarkierungsleuchte (5) bezogen auf die senkrecht auf die zugeordnete Fahrzeugseite (13) ausgerichtete Vertikalfläche (14) nach vorne und hinten jeweils in einem definierten Abstrahlwinkel (15, 16) abstrahlt, bevorzugt in einem Abstrahlwinkel von jeweils maximal 60° abstrahlt, höchst bevorzugt in einem Abstrahlwinkel von jeweils in etwa 45° abstrahlt.

3. Fahrzeug nach Anspruch 1 oder 2, **dadurch gekennzeichnet, dass** der seitliche Fahrtrichtungsanzeiger (6) von oben betrachtet bezogen auf die Fahrzeugseitenfläche (13) in einem definierten Abstrahlwinkel (17) nach hinten abstrahlt, bevorzugt in einem Abstrahlwinkel von maximal 70° nach hinten abstrahlt, höchst bevorzugt in einem Abstrahlwinkel von in etwa 60° nach hinten abstrahlt, wobei ggf. vorgesehen ist, dass der Abstrahlwinkel ausgehend von der Fahrzeugseitenfläche (13) um einen definierten Winkel (18), bevorzugt um einen Winkel von 5°, reduziert ist.

4. Fahrzeug nach einem der Ansprüche 1 bis 3, **dadurch gekennzeichnet, dass** die Seitenmarkierungsleuchten-Leuchtintensität und die Fahrtrichtungsanzeiger-Leuchtintensität unterschiedlich ausgelegt sind.

5. Fahrzeug nach einem der Ansprüche 1 bis 4, **dadurch gekennzeichnet, dass** bei eingeschaltetem Standlicht die linksseitigen und rechtseitigen Seitenmarkierungsleuchten (5) dauerhaft mit eingeschaltet sind.

6. Fahrzeug nach einem der Ansprüche 1 bis 5, **dadurch gekennzeichnet, dass** bei eingeschaltetem oder nicht eingeschaltetem Standlicht die seitlichen Fahrtrichtungsanzeiger (6) entsprechend der Blinkerbetätigung links oder rechts im Blinkbetrieb mit eingeschaltet sind, jedoch bei eingeschalteter Warnblinkanlage oder bei eingelegtem Rückwärtsgang eventuell, nur bei eingeschaltetem Standlicht, beidseitig im Blinkbetrieb mit eingeschaltet sind.

7. Fahrzeug nach einem der Ansprüche 1 bis 6, **dadurch gekennzeichnet, dass** das Fahrzeug ein Bus, ein Zugfahrzeug und/oder ein Sattelauflieger und/oder ein Anhänger ist.

## Claims

1. Vehicle, in particular multi-track motor vehicle, comprising a lighting and signal device comprising a plurality of switchable side marker luminaires (5) arranged at points at a distance from one another on a left and right vehicle side (13), said side marker luminaires, when switched on, in each case emitting light at a defined side marker luminaire emission angle (12) and with a defined side marker luminaire luminous intensity, and comprising travel direction indicators (6) fitted to both sides of the vehicle (1), which travel direction indicators are switchable independently of one another and independently of side marker luminaires and, when switched on, flash with a flashing function and in the process emit light having a defined flashing frequency at a defined travel direction indicator emission angle (17) and with a defined travel direction indicator luminous intensity, wherein, at at least one position of a side marker luminaire (5), a side marker luminaire (5) is combined with a lateral travel direction indicator (6) in such a way that the side marker luminaire (5) and the travel direction indicator (6) are arranged one directly above the other in their proximity region (4), **characterized in that** the side marker luminaire (5), having a side marker luminaire illuminant and side marker luminaire light guide elements, and the travel direction indicator (6), having a travel direction indicator illuminant and travel direction indicator light guide elements, are arranged one above the other and in a separated manner, preferably by a partition wall (9), in a common integral or an assembled luminaire housing (7) of a combined luminaire (4), and **in that** the side marker luminaire (5) and a travel direction indicator (6) assigned thereto each have a different emission angle (15, 16, 17).

2. Vehicle according to Claim 1, **characterized in that** the side marker luminaire (5), relative to the vertical surface (14) oriented perpendicularly to the assigned vehicle side (13), emits towards the front and rear in each case at a defined emission angle (15, 16), preferably emits at an emission angle of a maximum of 60° in each case, very highly preferably emits at an emission angle of approximately 45° in each case.

3. Vehicle according to Claim 1 or 2, **characterized in that** the lateral travel direction indicator (6), as viewed from above relative to the vehicle side surface (13), emits towards the rear at a defined emission angle (17), preferably emits towards the rear at an emission angle of a maximum of 70°, very highly preferably emits towards the rear at an emission angle of approximately 60°, wherein provision is made, if appropriate, for the emission angle proceeding from the vehicle side surface (13) to be reduced by a defined angle (18), preferably by an angle of 5°.

4. Vehicle according to any of Claims 1 to 3, **characterized in that** the side marker luminaire luminous intensity and the travel direction indicator luminous intensity are designed to be different.

5. Vehicle according to any of Claims 1 to 4, **characterized in that** with a parking light switched on, the side marker luminaires (5) on the left-hand side and right-hand side are permanently switched on concomitantly.

6. Vehicle according to any of Claims 1 to 5, **characterized in that** with a parking light switched on or not switched on, the lateral travel direction indicators (6) are concomitantly switched on in accordance with the flashing indicator actuation on the left or right in flashing operation, but with the hazard warning lights switched on or with the reverse gear engaged, possibly, only with a parking light switched on, said travel direction indicators are concomitantly switched on on both sides in flashing operation.

7. Vehicle according to any of Claims 1 to 6, **characterized in that** the vehicle is a bus, a tractor vehicle and/or a semi-trailer and/or a trailer.

## Revendications

1. Véhicule, en particulier véhicule automobile à plusieurs voies, comportant un dispositif d'éclairage et de signalisation muni de plusieurs feux de position latéraux (5) commutables, qui sont disposés à distance l'un de l'autre en certains points sur des côtés gauche et droit (13) du véhicule qui, lorsqu'ils sont allumés, rayonnent respectivement de la lumière selon un angle de rayonnement de repérage latéral défini (12) et avec une intensité lumineuse de repérage latérale définie, et comportant des indicateurs de directions (6) montés des deux côtés du véhicule (1), qui peuvent être allumés indépendamment l'un de l'autre et des feux de position latéraux et qui clignotent lorsqu'ils sont allumés avec une fonction de clignotement et rayonnent ainsi une lumière avec une fréquence de clignotement définie selon un angle de rayonnement (17) défini des indicateurs de direction et avec une intensité lumineuse définie, dans lequel, en au moins une position d'un feu de position latéral (5), un feu de position latéral (5) est combiné à un indicateur de direction latéral (6) de manière à ce que le feu de position latéral (5) et l'indicateur de direction (6) soient disposés directement l'un au-dessus de l'autre dans leur zone proche (4), **caractérisé en ce que** le feu de position latéral (5), qui comprend un corps de feu de position latéral et des éléments de guidage optique de feu de position latéral, et le feu indicateur de direction (6), qui présente un corps de feu indicateur de direction et des éléments de guidage optique d'indicateur de direction, sont disposés l'un au-dessus de l'autre de manière séparée, de préférence par une paroi de séparation (9), dans une pièce commune d'un seul tenant ou dans un boîtier de feu (7) assemblé d'un feu combiné (4), et **en ce que** le feu de position latéral (5) et un indicateur de direction (6) qui lui est associé présent respectivement un angle de rayonnement (15, 16, 17) différent.

2. Véhicule selon la revendication 1, **caractérisé en ce que** le feu de position latéral (5) rayonne respectivement vers l'avant et vers l'arrière selon un angle de rayonnement défini (15, 16) par rapport à la surface verticale (14) orientée perpendiculairement au côté associé (13) du véhicule, **en ce qu'**il rayonne de préférence selon un angle de rayonnement maximum respectif de 60°, et de manière particulièrement préférable, selon un angle de rayonnement respectif d'environ 45°.

3. Véhicule selon la revendication 1 ou 2, **caractérisé en ce que** l'indicateur de direction latéral (6), vu de dessus, rayonne vers l'arrière par rapport à la surface latérale (13) du véhicule selon un angle de rayonnement défini (17), **en ce qu'**il rayonne de préférence vers l'arrière selon un angle de rayonnement maximum de 70°, et **en ce qu'**il rayonne de manière particulièrement préférable vers l'arrière selon un angle de rayonnement d'environ 60°, dans lequel il est éventuellement fait en sorte que l'angle de rayonnement par rapport à la surface latérale (13) du véhicule soit réduit d'un angle défini (18), de préférence d'un angle de 5°.

4. Véhicule selon l'une des revendications 1 à 3, **caractérisé en ce que** l'intensité du feu de position latéral et l'intensité du feu indicateur de direction sont ajustées de manière différente.

5. Véhicule selon l'une des revendications 1 à 4, **caractérisé en ce que**, lorsque le feu de stationnement est allumé, les feux de position latéraux gauche et droit (5) sont également allumés en permanence.

6. Véhicule selon l'une des revendications 1 à 5, **caractérisé en ce que**, lorsque le feu de stationnement est allumé ou non allumé, les indicateurs de direction latéraux (6) sont allumés selon l'actionnement des indicateurs à gauche ou à droite dans le mode de fonctionnement de clignotement, mais lorsque les feux de détresse sont allumés ou lorsque la marche arrière est engagée, ils ne peuvent également être allumés des deux côtés dans le mode de fonctionnement de clignotement que lorsque le feu de stationnement est allumé.

7. Véhicule selon l'une des revendications 1 à 6, **caractérisé en ce que** le véhicule est un autobus, un véhicule tracteur et/ou un semi-remorque et/ou une remorque.
